# EUROPÄISCHE PATENTANMELDUNG

(11) **EP 1 806 517 A1**
(43) Veröffentlichungstag der Anmeldung: **11.07.2007**
(21) Anmeldenummer: 06012217.3
(22) Anmeldetag: 14.06.2006
(51) Int. Cl.: F16F 1/38

(54) **Elastomer-Metall-Gelenklager, insbesondere als Zentralgelenklager eines Dreieckslenkers zur Verbindung eines Achskörpers mit einem Fahrzeugaufbau**

(30) Priorität: 09.01.2006 DE 202006000285 U
(71) Anmelder: Jörn GmbH, 71336 Waiblingen (DE)
(72) Erfinder: Zawadzki, Bernd, 71409 Schwaikheim (DE)
(74) Vertreter: Neubauer, Hans-Jürgen

(57) **Zusammenfassung**

Die Erfindung betriffft ein Elastomer-Metall-Gelenklager, insbesondere als Zentralgelenklager eines Dreieckslenkers zur Verbindung eines Achskörpers mit einem Fahrzeugaufbau, mit einem im montierten Zustand in einem Aufnahmeauge (19) aufgenommenen Lagerinnenteil (2), das um eine Lagerachse (3) rotationssymmetrisch ausgebildet ist, und mit einem, im montierten Zustand vorgespannten Elastomerkörper (7) zwischen dem Lagerinnenteil (2) und dem Aufnahmeauge (19). Erfindungsgemäß ist der einstückig ausgebildete Elastomerkörper (7) zwischen einer das Lagerinnenteil (2) in Umfangsrichtung wenigstens abschnittsweise umgebenden Außenschale (5) und dem Lagerinnenteil (2) angeordnet, insbesondere einvulkanisiert zur Ausbildung eines Elastomer-Metall-Elementes (1), das im montierten Zustand unter Erzeugung einer radialen Vorspannung in das Aufnahmeauge (19) eingepresst ist. Das Lagerinnenteil (2) weist in Lagerachsrichtung gesehen einen außenkonturseitig ausgebildeten, zylinderförmigen, vorzugsweise zylindrischen Lagerinnenteil-Längsmittenbereich (10) als radiale Stützfläche auf, an den sich zu beiden Seiten axiale Stützflächen (11), insbesondere sich in Richtung zur Lagerachse (3) hin verjüngende Verjüngungsbereiche anschließen.

## Beschreibung

Die Erfindung betrifft ein Elastomer-Metall-Gelenklager, insbesondere als Zentralgelenklager eines Dreieckslenkers zur Verbindung eines Achskörpers mit einem Fahrzeugaufbau nach dem Oberbegriff des Anspruchs 1.

Ein bekanntes gattungsgemäßes Elastomer-Metall-Gelenklager, das als Zentralgelenklager für einen Dreieckslenker zur Verbindung eines Achskörpers mit einem Fahrzeugaufbau ausgebildet ist, ist aus der DE 100 32 961 A1 (dort Fig. 1 und Fig. 2) bekannt. Dieses Gelenklager weist ein lenkerendseitiges, metallisches Aufnahmeauge als erstes Lagerteil sowie ein längliches Lagerinnenteil auf, das in das metallische Aufnahmeauge eingesetzt ist und das mit Anschlusspratzen aus dem Bereich des Aufnahmeauges vorsteht. Konkret sind hier sowohl das Zentralgelenk am Dreieckslenker als auch die beiden anderen Gelenke jeweils als Kugelgelenke ausgebildet. Vom Kugelteil des Kugelgelenks ausgehend erstrecken sich die in Richtung der Lagerachse ausgerichteten Anschlusspratzen und damit auch die Lagerachse selbst im Wesentlichen in der durch den Dreieckslenker aufgespannten Lenkerebene. Die Anschlusspratzen sind über Lagerböcke am Fahrzeugaufbau bzw. am Achskörper festgelegt. Derartige als Kugelgelenklager für eine insbesondere kardanische Kraftaufnahme ausgebildete Elastomer-Metall-Gelenklagern sind für Einsatzfälle wie sie z. B. in Verbindung mit Nutzfahrzeugen auftreten, die eine Nutzlast von mehreren hundert Tonnen aufweisen, weniger geeignet ist, da hier solche hohen Kräfte wirken können, die kardanisch nicht mehr gut abgestützt und aufgenommen werden können, so dass die Gefahr eines frühzeitigen Lagerschadens besteht. Derartige Kugelgelenklager sind somit für derartige hochbelastete Lagerstellen weniger geeignet.

Aufgabe der vorliegenden Erfindung ist es daher, ein Elastomer-Metall-Gelenklager, insbesondere als Zentralgelenklager für einen Dreieckslenker zur Verbindung eines Achskörpers mit einem Fahrzeugaufbau, zur Verfügung zu stellen, mit dem insbesondere bei Nutzfahrzeugen mit sehr hohen Nutzlasten im Bereich von mehreren hundert Tonnen eine optimale Kraftaufnahme in Verbindung mit einer hohen Dauerhaltbarkeit des Gelenklagers realisiert werden kann.

Diese Aufgabe wird gelöst mit den Merkmalen des Anspruchs 1. Vorteilhafte Ausgestaltungen sind Gegenstand der Unteransprüche.

Gemäß Anspruch 1 ist der einstückig ausgebildete Elastomerkörper zwischen einer das Lagerinnenteil in Umfangsrichtung wenigstens abschnittsweise umgebenden Außenschale und dem Lagerinnenteil angeordnet, insbesondere einvulkanisiert, um ein Elastomer-Metall-Element auszubilden, das im montierten Zustand unter Erzeugung einer im Wesentlichen radialen Vorspannung in das Aufnahmeauge eingepresst ist. Das Lagerinnenteil weist ferner in Lagerachsrichtung gesehen einen außenkonturseitig ausgebildeten zylinderförmigen, insbesondere zylindrischen Lagerinnenteil-Längsmittenbereich als radiale Stützfläche auf, an den sich zu beiden Seiten in Richtung zur Lagerachse hin axiale Stützflächen, z. B. als Verjüngungsbereiche anschließen.

Mit einem derartigen langgestreckten und abgeflachten Längsmittenbereich können vorteilhaft sehr hohe Radialkräfte in dem Gelenklager aufgenommen und abgestützt werden, wobei gleichzeitig jedoch auch durch den kurzen, endseitigen Verjüngungsbereich eine Aufnahme und Abstützung von Axialkräften erfolgen kann. Bevorzugt ist hier eine zylindrische Ausgestaltung des Längsmittenbereiches vorgesehen, wobei dieser für bestimmte Einsatzfälle jedoch auch leicht konvex gekrümmt ausgebildet sein kann, d. h. eine auf jeden Fall sehr abgeflachte Formgebung aufweisen kann.

Ein optimierter Lageraufbau wird mit einer Auslegung erreicht, bei der der Lagerinnenteil-Längsmittenbereich eine Länge aufweist, die in etwa dem 0,5 bis 0,8-fachen der axialen Wirklänge des Elastomerkörpers entspricht. Unter der Wirklänge des Elastomerkörpers wird dabei diejenige Länge des Elastomerkörpers in Lagerachsrichtung verstanden, über die axiale als auch radiale Kräfte in das Lager eingeleitet und dort aufgenommen werden können, d. h. im Wesentlichen diejenige Länge, bei der der Bereich zwischen Lagerinnenteil und Außenschale im nicht vorgespannten Zustand vollständig mit Elastomermaterial ausgefüllt ist.

Eine alternative oder weitergehende Optimierung wird dann erreicht, wenn der zylinderförmige Lagerinnenteil-Längsmittenbereich eine Länge aufweist, die in etwa dem 0,25 bis 0,5-fachen, bevorzugt in etwa dem 0,30 bis 0,40-fachen, höchst bevorzugt dem in etwa 0,35-fachen des Außendurchmessers des Lagerinnenteils im Längsmittenbereich entspricht. Mit einer derartigen Auslegung können besonders hohe Radialkräfte im Bereich des Lagers aufgenommen und abgestützt werden.

Besonders vorteilhaft ist ein Aufbau, bei dem die Innenkontur der Außenschale an die Außenkontur des Lagerinnenteils form- und konturangepasst ausgebildet ist, so dass diese einen ebenfalls zylinderförmigen Außenschalen-Längsmittenbereich mit im Wesentlichen gleicher Längserstreckung wie der Lagerinnenteil-Längsmittenbereich sowie einen sich zu beiden Seiten hin an den Außenschalen-Längsmittenbereich anschließenden, ebenfalls form- und konturangepasst ausgebildeten, sich in Richtung Lagerachse hin verengenden Außenschalen-Verengungsbereich aufweist. Mit einem derartigen Aufbau wird eine besonders optimierte Krafteinleitung in das Gelenklager unter Aufnahme hoher radialer Kräfte möglich.

In den Elastomerkörper ist gemäß einer weiteren bevorzugten Ausgestaltung der Erfindung wenigstens eine, den Elastomerkörper radial unterteilende und radial wenigstens bereichsweise um das Lagerinnenteil umlaufende Zwischenschale eingebracht, die ebenfalls an die Außenkontur des Lagerinnenteils form- und konturangepasst ausgebildet ist und dementsprechend einen Zwischenschalen-Längsmittenbereich sowie sich daran anschließende Zwischenschalen-Verengungsbereiche aufweist. Der Elastomerkörper selbst ist mittels der vorzugsweise durch Zwischenbleche gebildeten Zwischenschalen in Radialrichtung gesehen in jeweils eine gleiche Wandstärke aufweisende Elastomerschichten aufgeteilt. Für eine besonders hohe Kraftaufnahme ist vorgesehen, dass der Elastomerkörper eine Mehrzahl von einzelnen Elastomerschichten, höchst bevorzugt von vier bis sechs Elastomerschichten von im Wesentlichen gleicher Materialstärke aufweist, die durch die dann entsprechende Anzahl von Zwischenschalen bzw. Zwischenblechen voneinander beabstandet sind. Eine optimierte Auslegung des Elastomerkörpers sieht vor, dass dieser im Längsmittenbereich eine Materialstärke aufweist, die in etwa dem 0,35 bis 0,75-fachen, bevorzugt dem 0,5 bis 0,6-fachen der axialen Wirklänge des Elastomerkörpers entspricht.

Die sich an die Längsmittenbereich des Lagerinnenteils und der Außenschale anschließenden Bereiche sind vorzugsweise als Krümmungsbereiche mit vorgegebenen Krümmungsradius ausgebildet, wodurch ein weicher und fließender Übergang von den Längsmittenbereichen zu den Endbereichen hin erfolgt, an die sich gegebenenfalls wiederum kurze, zylinderförmige Längsbereiche anschließen können. Durch diese Krümmungsbereiche, die mit einem entsprechend der abzustützenden Axialkräfte vorgegebenen Krümmungsradius ausgebildet sind, lassen sich die jeweils anfallenden Axialkräfte sehr vorteilhaft und einfach mit der erforderlichen Funktionssicherheit abstützen.

Um das Elastomer-Metall-Element in das Aufnahmeauge einpressen zu können, weist dieses außenumfangsseitig einen bevorzugt V-förmig ausgebildeten Schlitzbereich auf, der sich von der vorzugsweise metallischen Außenschale ausgehend durch den Elastomerkörper hindurch bis zum Lagerinnenteil erstreckt und der im montierten, verpressten Zustand des Elastomer-Metall-Elementes im Aufnahmeauge wenigstens zum Teil, bevorzugt jedoch ganz geschlossen ist. Bei mehreren Schlitzen sind diese paarweise, einander in Umfangsrichtung gegenüberliegend angeordnet.

Alternativ dazu kann die Außenschale jedoch auch als beim Einpressen geschlossener Ring, z. B. Kunststoffring, aus einem verformbaren Material, z. B. Kunststoffmaterial, ausgebildet sein bei den die radiale Vorspannung durch Verformung des Rings erzeugt wird. Im Falle eines geschlitzten Kunststoffrings mit einem oder mehreren Schlitzen ist dabei sicherzustellen, dass die Schlitze während des Einpressens geschlossen sind, so dass sich der Ring verformen kann und eine gleichmäßige Vorspannung aufgebracht werden kann.

Die Außenschale selber weist ebenfalls eine an die Innenkontur des Aufnahmeauges angepasste, vorzugsweise zylinderförmige, höchst bevorzugt zylindrische Außenschalen-Außenkontur auf, mit der ein einfaches und funktionssicheres Einpressen des Elastomer-Metall-Elementes in ein Aufnahmeauge erfolgen kann.

Das Lagerinnenteil ist bevorzugt rohrförmig, d. h. beispielsweise mit einer sich in Axialrichtung bzw. in Richtung der Lagerachse erstreckenden Bohrung ausgebildet und im montierten Zustand formschlüssig auf ein Gegenelement aufgesteckt und dort lagefixiert gehalten und gesichert. Beispielsweise kann die Innenkontur des rohrförmigen Lagerinnenteils hier durch einen Innenkonus als Befestigungskonus ausgebildet sein, der auf einen Konuszapfen als Gegenelement aufgesteckt ist. Alternativ dazu kann das Lagerinnenteil jedoch auch sich einseitig, bevorzugt zu beiden Seiten an die Lagerinnenteil-Verjüngungsbereiche anschließende Anschlusspratzen aufweisen, die im montierten Zustand aus dem Bereich des Aufnahmeauges vorstehen und z. B. achsseitig an Lagerböcken mittels entsprechender Schraubverbindungen festgelegt sind.

Gemäß einer besonders bevorzugten Anwendungsform ist das Gelenklager ein Zentralgelenk eines Dreieckslenkers zur Verbindung eines Achskörpers mit einem Fahrzeugaufbau für schwere Nutzfahrzeuge, d. h. für eine hohe Nutzlast von vorzugsweise mehreren hundert Tonnen aufnehmenden Fahrzeugen, von dem ausgehend sich Lagerschenkel im Wesentlichen V-förmig zu den beiden anderen Lagerstellen, die ebenfalls so wie hier beschrieben aufgebaut sein können, erstrecken. Dabei verläuft die Gelenkachse im montierten Zustand im Wesentlichen in Fahrzeughochachsenrichtung, so dass insbesondere die im Fahrbetrieb auftretenden sehr hohen Querkräfte im Wesentlichen radial in das Gelenklager eingeleitet und dort aufgrund des erfindungsgemäßen Aufbaus optimal aufgenommen werden können, wodurch sich eine sehr hohe Hltbarkeit des Lager ergibt. Über die axiale Abstützmöglichkeit der sich an die jeweiligen Längsmittenbereiche anschließenden Verjüngungs- bzw. Verengungsbereiche kann dann z. B. in Verbindung mit einem evtl. Einfedern eine Axialabstützung und Axialkraftaufnahme erfolgen.

Die Erfindung wird anhand einer Zeichnung näher erläutert.

Es zeigen:
- Fig. 1: eine schematische Draufsicht auf ein Elastomer-Metall-Element des erfindungsgemäßen Elastomer-Metall-Gelenklagers,
- Fig. 2: eine schematische Schnittansicht entlang der Linie A-A der Fig. 1, und
- Fig. 3: das Elastomer-Metall-Element nach Fig. 1 und 2 im in ein Aufnahmeauge eines Zentralgelenklagers eines Dreieckslenkers eingepressten Zustand.

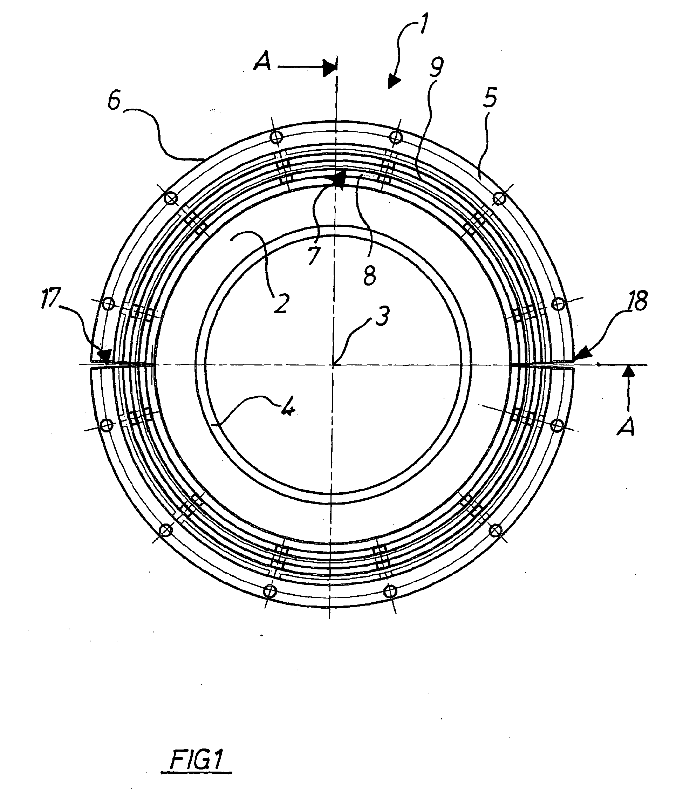

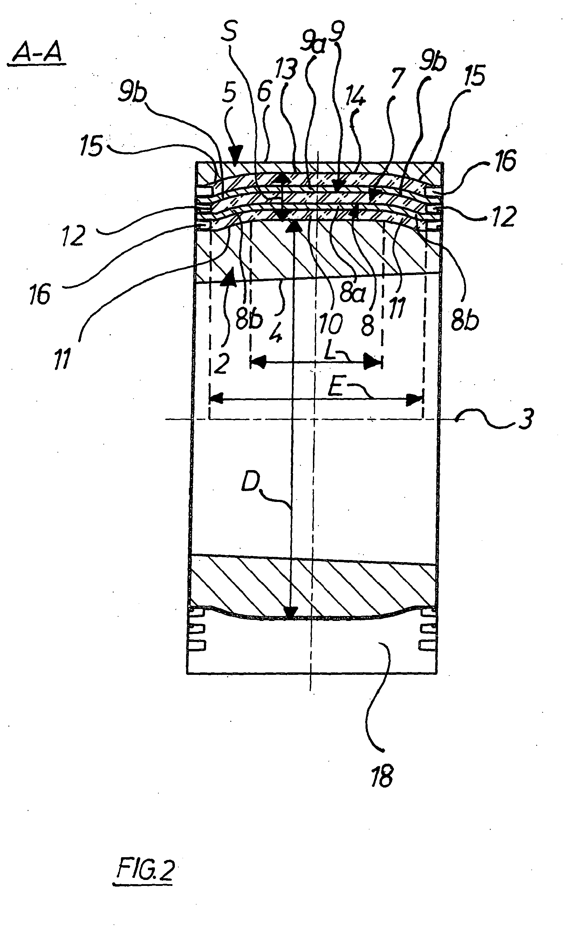

In den Fig. 1 und 2 ist ein Elastomer-Metall-Element 1 gezeigt, das ein metallisches Lagerinnenteil 2 aufweist, das um eine Lagerachse 3 rotationssymmetrisch ausgebildet ist. Wie dies insbesondere der Fig. 2 zu entnehmen ist, ist das metallische Lagerinnenteil 2 mit einem Innenkonus 4 ausgebildet, der zur Lagerfixierung auf einen hier nicht dargestellten Konuszapfen aufgesteckt und lagefixiert gehalten werden kann, worauf aber hier nicht mehr weiter eingegangen wird.

Das Elastomer-Metall-Element 1 weist weiter eine das Lagerinnenteil 2 in Umfangsrichtung umgebende, metallische Außenschale 5 auf, die hier beispielhaft eine kreiszylindrische Außenkontur 6 aufweist.

Zwischen diese Außenschale 5 und das Lagerinnenteil 2 ist ein einstückig ausgebildeter Elastomerkörper 7 einvulkanisiert, in dem für einen mehrschichtigen Aufbau des Elastomerkörpers 7 hier beispielhaft zwei Zwischenbleche 8, 9 integriert sind.

Wie dies insbesondere der Fig. 2 entnommen werden kann, weist das Lagerinnenteil 2 in Lagerachsrichtung gesehen einen außenkonturseitig ausgebildeten, langgestreckten und zylindrischen Lagerinnenteil-Längsmittenbereich 10 als radiale Stützfläche auf, an den sich zu den beiden Stirn- bzw. Endseiten hin ein sich in Richtung zur Lagerachse hin verjüngender und als Lagerinnenteil-Krümmungsbereich 11 ausgebildeter Verjüngungsbereich anschließt, um axiale Stützflächen auszubilden. Wie dies der Fig. 2 entnommen werden kann, sind diese beiden Lagerinnenteil-Krümmungsbereiche 11 jeweils für sich alleine betrachtet sehr kurz gegenüber dem langgestreckten Lagerinnenteil-Längsmittenbereich 10 ausgebildet und jeweils einem endseitigen Wirkbereich 12 des Elastomerkörpers zugeordnet. Bevorzugte Ausgestaltungen ergeben sich hierbei dann, wenn der Lagerinnenteil-Längsmittenbereich 10 eine Länge L aufweist, die in etwa dem 0,5 bis 0,8-fachen der axialen Wirklänge E des Elastomerkörpers 7 im nicht vorgespannten Zustand entspricht. Alternativ oder zusätzlich dazu wird eine weitere bevorzugte Optimierung des Elastomer-Metall-Elements 1 dadurch erreicht, dass der zylindrische Lagerinnenteil-Längsmittenbereich 10 eine Länge L aufweist, die z. B. in etwa dem 0,35-fachen des Außendurchmessers D des Lagerinnenteils 2 im Lagerinnenteil-Längsmittenbereich 10 entspricht.

Wie dies der Fig. 2 weiter entnommen werden kann, unterteilen die Zwischenbleche 8, 9 den Elastomerkörper jeweils in Elastomerschichten von im Wesentlichen gleicher Materialstärke, wobei für eine hervorragende Arbeitsaufnahme mehrere Elastomerschichten und dementsprechend Zwischenbleche vorgesehen sind, bevorzugt zwischen drei bis sechs Elastomerschichten mit entsprechenden Zwischenblechen. Eine Optimierung des Lagers hinsichtlich der Ausbildung des Elastomerkörpers 7 wird erreicht, indem der Elastomerkörper 7 im Längsmittenbereich eine Materialstärke S aufweist, die in etwa dem 0,5 bis 0,6-fachen der axialen Wirklänge E des Elastomerkörpers 7 entspricht.

Wie dies ebenfalls wiederum insbesondere der Fig. 2 zu entnehmen ist, ist die Innenkontur 13 der Außenschale 5 hier ebenso wie die Zwischenbleche 8 und 9 mit einer der Formgebung des Lagerinnenteil-Längsmittenbereichs 10 und des Lagerinnenteil-Krümmungsbereich 11 in etwa identischen Form und Kontur ausgebildet, so dass an der Innenkontur 13 der Außenschale 5 ein der Länge und Form des Lagerinnenteil-Längsmittenbereichs 10 und des Lagerinnenteil-Krümmungsbereichs 11 angepasster Außenschalen-Längsmittenbereich 14 und Außenschalen-Krümmungsbereich 15 ausgebildet ist. Ebenso sind analog hierzu an den Zwischenblechen 8, 9 entsprechend form- und konturangepasste Zwischenblech-Längsmittenbereiche 8a und 9a sowie Zwischenblech-Krümmungsbereiche 8b und 9b ausgebildet, so dass die Außenschale 5, die Zwischenbleche 8, 9 und das Lagerinnenteil 10 in diesen Längsmittenbereichen und Krümmungsbereichen in Umfangsrichtung gesehen einen jeweils gleichen Spaltabstand voneinander aufweisen, in den dann das Elastomermaterial des Elastomerkörpers 7 schichtweise aufgenommen ist. D. h., dass die jeweiligen Längsmittenbereiche 8a, 9a, 10 und 14 in Lagerachsrichtung gesehen jeweils eine im Wesentliche gleiche Länge L aufweisen, ebenso wie die jeweiligen Krümmungsbereiche 8b, 9b, 11 und 15 einen im Wesentlichen gleichen Krümmungsradius aufweisen.

Die axiale Wirklänge des Elastomerkörpers 17 ist hier so gewählt, dass in Lagerachsrichtung gesehen an den Stirnseiten zwischen weiteren zylindrischen Bereichen der Außenschale 5, der Zwischenbleche 8, 9 und des Lagerinnenteils 2 umlaufende Radialspalte 16 ausgebildet sind, in die hinein sich der Elastomerkörper 7 beim Verpressen des Elastomer-Metall-Elementes 1 hineinverformen kann.

Wie dies wiederum der Fig. 1 am besten entnommen werden kann, weist das Elastomer-Metall-Element 1 zwei sich diametral gegenüberliegende, V-förmige Schlitzbereiche 17, 18 auf, die sich jeweils von der Außenschale 5 ausgehend durch den Elastomerkörper 7 und damit die Zwischenbleche 8 und 9 hindurch bis zum Lagerinnenteil 2 erstrecken.

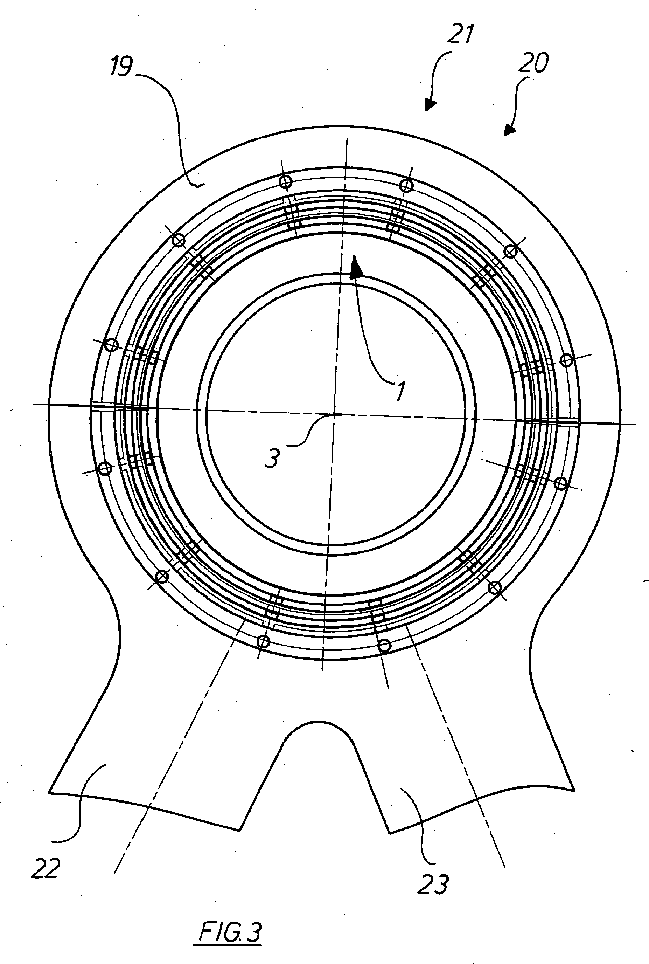

Bei der Montage des Elastomer-Metall-Elementes 1, bei der dieses in ein Aufnahmeauge 19 (Fig. 3) eines als Elastomer-Metall-Gelenklager ausgebildeten Zentralgelenklagers 20 eingepresst ist, werden diese Schlitzbereiche 17, 18 wenigstens zum Teil bevorzugt jedoch ganz, insbesondere im Bereich des Elastomerkörpers 7, geschlossen, wozu das Elastomer-Metall-Element 1 in an sich bekannter Weise mit einem radialen Übermaß ausgebildet ist, d. h der Außendurchmesser des Elastomer-Metall-Elements 1 bzw. der Außenschale 5 ist größer als der Innendurchmesser des Aufnahmeauges 19. Bei diesem Einpressen des Elastomer-Metall-Elementes 1 in das Aufnahmeauge 19 wird eine radiale Vorspannung in dem Elastomer-Metall-Element erzeugt, wodurch die im Fahrbetrieb auftretenden hohen Quer- bzw. Radialkräfte in das Zentralgelenklager 20 eingeleitet und dort molekular aufgenommen werden. Wie dies der Fig. 3 weiter zu entnehmen ist, ist die Lager- bzw. Gelenkachse 3 hier im Wesentlichen in Fahrzeughochachsenrichtung ausgerichtet. In Hochachsenrichtung wirkende Kräfte können als Axialkräfte wirksam über die Krümmungsbereiche abgestützt und aufgenommen werden.

Im verpressten Zustand ist die Außenschale 5 formschlüssig in dem ebenfalls kreiszylindrisch ausgebildeten Aufnahmeauge 19 aufgenommen.

Wie dies der Fig. 3 weiter lediglich schematisch entnommen werden kann, schließen sich an das Aufnahmeauge 19 des Zentralgelenklagers 20 zur Ausbildung eines Dreieckslenkers 21 Lagerschenkel 22, 23 an, die sich im Wesentlichen V-förmig zu den beiden anderen, hier nicht gezeigten und z. B. fahrzeugaufbauseitig angeordneten Lagerstellen erstrecken.

## Patentansprüche

1. Elastomer-Metall-Gelenklager, insbesondere als Zentralgelenklager eines Dreieckslenkers zur Verbindung eines Achskörpers mit einem Fahrzeugaufbau,
mit einem im montierten Zustand in einem Aufnahmeauge (19) aufgenommenen Lagerinnenteil (2), das um eine Lagerachse (3) rotationssymmetrisch ausgebildet ist, und
mit einem, im montierten Zustand vorgespannten Elastomerkörper (7) zwischen dem Lagerinnenteil (2) und dem Aufnahmeauge (19),
**dadurch gekennzeichnet,**
**dass** der einstückig ausgebildete Elastomerkörper (7) zwischen einer das Lagerinnenteil (2) in Umfangsrichtung wenigstens abschnittsweise umgebenden Außenschale (5) und dem Lagerinnenteil (2) angeordnet, insbesondere einvulkanisiert ist zur Ausbildung eines Elastomer-Metall-Elementes (1), das im montierten Zustand unter Erzeugung einer radialen Vorspannung in das Aufnahmeauge (19) eingepresst ist, und
**dass** das Lagerinnenteil (2) in Lagerachsrichtung gesehen einen außenkonturseitig ausgebildeten, zylinderförmigen, vorzugsweise zylindrischen Lagerinnenteil-Längsmittenbereich (10) als radiale Stützfläche aufweist, an den sich zu beiden Seiten axiale Stützflächen (11), insbesondere sich in Richtung zur Lagerachse (3) hin verjüngende Verjüngungsbereiche anschließen.

2. Elastomer-Metall-Gelenklager nach Anspruch 1, **dadurch gekennzeichnet, dass** der Lagerinnenteil-Längsmittenbereich (10) langgestreckt ausgebildet ist und sich in Lagerachsrichtung im Wesentlichen über die gesamte Länge des Elastomerkörpers (7) erstreckt.

3. Elastomer-Metall-Gelenklager nach Anspruch 2, **dadurch gekennzeichnet, dass** die beiden Lagerinnenteil-Verjüngungsbereiche (11) jeweils für sich alleine betrachtet kurz gegenüber dem langgestrecken Lagerinnenteil-Längsmittenbereich (10) ausgebildet und jeweils einem endseitigen Wirkbereich (12) des Elastomerkörpers (7) zugeordnet sind.

4. Elastomer-Metall-Gelenklager nach einem der Ansprüche 1 bis 3, **dadurch gekennzeichnet, dass** der Lagerinnenteil-Längsmittenbereich (10) eine Länge (L) aufweist, die in etwa dem 0,5 bis 0,8-fachen der axialen Wirklänge (E) des Elastomerkörpers (7) entspricht.

5. Elastomer-Metall-Gelenklager nach einem der Ansprüche 1 bis 4, **dadurch gekennzeichnet, dass** der zylinderförmige Lagerinnenteil-Längsmittenbereich (10) eine Länge (L) aufweist, die in etwa dem 0,25 bis 0,5-fachen, bevorzugt in etwa dem 0,30 bis 0,40-fachen, höchst bevorzugt dem in etwa 0,35-fachen des Außendurchmessers (D) des Lagerinnenteils (2) im Lagerinnenteil-Längsmittenbereich (10) entspricht.

6. Elastomer-Metall-Gelenklager nach einem der Ansprüche 1 bis 5, **dadurch gekennzeichnet, dass** die Innenkontur (13) der Außenschale (5) an die Außenkontur des Lagerinnenteils (2) form- und konturangepasst ausgebildet ist und ebenfalls einen entsprechend ausgebildeten zylinderförmigen, insbesondere zylindrischen Außenschalen-Längsmittenbereich (14) mit im Wesentlichen gleicher Längserstreckung (L) wie der Lagerinnenteil-Längsmittenbereich (10) sowie einen sich zu beiden Seiten hin an den Außenschalen-Längsmittenbereich (14) anschließenden, ebenfalls entsprechend form- und konturangepassten ausgebildeten, sich in Richtung zur Lagerachse (3) hin verengenden Außenschalen-Verengungsbereich (15) aufweist dergestalt, dass die Außenschale (5) einen in Umfangsrichtung gesehen in diesen Bereichen im Wesentlichen gleichen Abstand zum Lagerinnenteil (2) aufweist.

7. Elastomer-Metall-Gelenklager nach Anspruch 6, **dadurch gekennzeichnet, dass** in den Elastomerkörper (7) wenigstens eine, den Elastomerkörper (7) in Umfangsrichtung bevorzugt in Elastomerschichten gleicher Materialstärke unterteilende und in Umfangsrichtung wenigstens bereichsweise um das Lagerinnenteil (2) umlaufende Zwischenschale (8, 9), höchst bevorzugt eine Mehrzahl von Zwischenschalen (8, 9), integriert ist, die an die Außenkontur des Lagerinnenteils (2) form- und konturangepasst ausgebildet ist und einen Zwischenschalen-Längsmittenbereich (8a, 9a) mit im Wesentlicher gleicher Längserstreckung (L) wie der Lagerinnenteil-Längsmittenbereich (10) und der Außenschalen-Längsmittenbereich (14) aufweist, an den sich zu beiden Seiten ein entsprechend an den Lagerinnenteil-Verjüngungsbereich (11) und an den Außenschalen-Verengungsbereich (15) form- und konturangepasst ausgebildeter, sich in Richtung zur Lagerachse (3) hin verengender Zwischenschalen-Verengungsbereich (8b, 9b) anschließt.

8. Elastomer-Metall-Gelenklager nach einem der Ansprüche 1 bis 7, **dadurch gekennzeichnet, dass** der Elastomerkörper (7) im Längsmittenbereich eine Materialstärke (S) aufweist, die in etwa dem 0,35 bis 0,75-fachen, bevorzugt dem 0,5 bis 0,6-fachen der axialen Wirklänge (E) des Elastomerkörpers (7) entspricht.

9. Elastomer-Metall-Gelenklager nach einem der Ansprüche 1 bis 8, **dadurch gekennzeichnet, dass** die sich an die jeweiligen Längsmittenbereiche (8a, 9a, 10, 14) hin anschließenden Verjüngungs- und Verengungsbereiche als Krümmungsbereiche (8b, 9b, 11, 15) mit einem vorgegebenen Krümmungsradius ausgebildet sind.

10. Elastomer-Metall-Gelenklager nach Anspruch 9, **dadurch gekennzeichnet, dass** sich an die Krümmungsbereiche (11, 15) des Lagerinnenteils (10) und der Außenschale (5) ein weiterer zylinderförmiger Längsbereich anschließt, dessen Durchmesser jeweils kleiner ist als der Durchmesser des jeweils zugeordneten Längsmittenbereiches und die im Bereich des Elastomerkörpers (7) einen radial umlaufenden Ringspalt (16) ausbilden, in den hinein sich der Elastomerkörper (7) beim Verpressen des Gelenklagers (20) hineinverformt.

11. Elastomer-Metall-Gelenklager nach einem der Ansprüche 1 bis10, **dadurch gekennzeichnet, dass** das Elastomer-Metall-Element (1) wenigstens einen, bevorzugt V-förmigen Schlitzbereich (17, 18) aufweist, der sich von der Außenschale (5) ausgehend durch den Elastomerkörper (7) hindurch bis zum Lagerinnenteil (2) erstreckt und der im montierten, verpressten Zustand des Elastomer-Metall-Elementes (1) im Aufnahmeauge (19) wenigstens zum Teil, bevorzugt jedoch ganz, insbesondere wenigstens im Elastomerkörperbereich, geschlossen ist.

12. Elastomer-Metall-Gelenklager nach Anspruch 11, **dadurch gekennzeichnet, dass** im Falle mehrerer Schlitzbereiche (17, 18) diese paarweise, einander in Umfangsrichtung gegenüberliegend angeordnet sind.

13. Elastomer-Metall-Gelenklager nach einem der Ansprüche 1 bis 10, **dadurch gekennzeichnet, dass** die Außenschale als geschlossener oder geschlitzter Ring, vorzugsweise Kunststoffring aus einem verformbaren Material, vorzugsweise Kunststoffmaterial ausgebildet ist, der sich beim Einpressen des Elastomer-Metall-Elementes in das Aufnahmeauge, unter Aufbau einer radialen Vorspannung im Elastomerkörper, verformt und sich im Wesentlichen formschlüssig an die Innenkontur des Aufnahmeauges anlegt.

14. Elastomer-Metall-Gelenklager nach Anspruch 13, **dadurch gekennzeichnet, dass** der Ring, insbesondere der Kunststoffring in Lagerachsrichtung gesehen zu beiden Seiten mittels einer Abstützeinrichtung, insbesondere einer Anschlagschulter und/oder eines Abstützrings mit Sicherungsring und/oder einen Sicherungsring, vorzugsweise spannungsfrei abgestützt ist, insbesondere dergestalt gegen axiales Fließen gesichert ist, dass die Verformung des Ringes im Wesentlichen in Radialrichtung erfolgt.

15. Elastomer-Metall-Gelenklager nach einem der Ansprüche 1 bis 14, **dadurch gekennzeichnet, dass** die Außenschale (5) eine an die Innenkontur des Aufnahmeauges (19) angepasste, vorzugsweise zylinderförmige, höchst bevorzugt zylindrische Außenschalen-Außenkontur (6) aufweist.

16. Elastomer-Metall-Gelenklager nach einem der Ansprüche 1 bis 15, **dadurch gekennzeichnet, dass** das Lagerinnenteil (2) rohrförmig, vorzugsweise mit einem Innenkonus (4) als Befestigungskonus, ausgebildet ist, das im montierten Zustand formschlüssig auf ein Gegenelement, vorzugsweise einen Konuszapfen, aufgesteckt und dort lagefixiert gehalten und gesichert ist.

17. Elastomer-Metall-Gelenklager nach einem der Ansprüche 1 bis 15, **dadurch gekennzeichnet, dass** das Lagerinnenteil (2) wenigstens eine sich an einen Lagerinnenteil-Verjüngungsbereich (11) anschließende Anschlusspratze aufweist, die im montierten Zustand aus dem Bereich des Aufnahmeauges (19) vorsteht.

18. Elastomer-Metall-Gelenklager nach einem der Ansprüche 1 bis 17, **dadurch gekennzeichnet, dass** das Gelenklager ein Zentralgelenklager (20) eines Dreieckslenkers (21) zur Verbindung eines Achskörpers mit einem Fahrzeugaufbau für Nutzfahrzeuge, insbesondere für schwere Transport-Nutzfahrzeuge ist, von dem ausgehend sich Lagerschenkel (22, 23) im Wesentlichen V-förmig zu den beiden anderen gegebenenfalls gleich aufgebauten Lagerstellen erstrecken.

19. Elastomer-Metall-Gelenklager nach Anspruch 18, **dadurch gekennzeichnet, dass** die Lagerachse (3) im montierten Zustand im wesentlichen in Fahrzeughochachsenrichtung verläuft dergestalt, dass im Fahrbetrieb auftretende Querkräfte im Wesentlichen radial in das Zentralgelenklager (20) eingeleitet werden.
